# EUROPEAN PATENT SPECIFICATION

(11) **EP 3 480 525 B1**
(45) Date of publication and mention of the grant of the patent: **26.05.2021**
(21) Application number: 18204309.1
(22) Date of filing: 05.11.2018
(51) Int. Cl.: F24D 3/16, F24D 19/02

(54) **METHOD FOR INSTALLING A RADIANT PANEL AND A MOUNTING DEVICE**
VERFAHREN ZUR INSTALLATION EINER STRAHLUNGSPLATTE UND EINER MONTAGEVORRICHTUNG
PROCÉDÉ POUR INSTALLER UN PANNEAU RADIANT ET UN DISPOSITIF DE MONTAGE

(30) Priority: 06.11.2017 FI 20175986
(43) Date of publication of application: 08.05.2019
(73) Proprietor: Itula Oy, 56510 Puntala (FI)
(72) Inventor: Itkonen, Jukka, 53100 Lappeenranta (FI); Sormunen, Petri, 53920 Lappeenranta (FI)
(74) Representative: Papula Oy

(56) References cited:
- EP-A2- 1 156 284
- AT-B- 402 341
- BE-A6- 1 006 605
- CH-A- 338 946
- CH-A- 382 945
- DE-U1- 9 320 643
- DK-B- 151 054

## Description

### FIELD

The application relates to a method for installing a radiant panel defined in claim 1.

### BACKGROUND

Known from the prior art are different radiant panels. Radiant heating is a technology for heating indoor and outdoor areas. It is a method for transfering radiant heat energy from an emitting heat source to an object. The heat energy is emitted from an element, such as a floor, wall or overhead panel, and warms or cools people and other objects rather than directly heating or cooling the air. The internal air temperature for radiant heated buildings may be lower than for a conventionally heated building and still achieve the same level of comfort.

Radiant heating and cooling ceiling panels have traditionally been installed as a free hanging element or as a part of closed hanging ceiling. The increase in usage of radiant comfort technology requires that the panels can be integrated better into the room space. Also slimmer constructions and integration closer to the ceiling surfaces are needed because of demands of design and architecture. When renovation construction is made where the ceiling radiant heating solution is replacing the older systems, the new system needs to be possible to install to the ceiling surface. Often sinking into the surrounding ceiling structures is not possible. Brackets or angle irons have been traditionally used when the panels have been attached to the ceiling but these systems require drilling into the panel, and then the risk of water damage increases. Traditional systems have also had aesthetic problems.

BE 1006605, AT 402341, EP 1156284, DE 9320643, DK 151054, CH 382945 and CH 338946 disclose different mounting devices for installing panel-type products A method according to the preamble of claim 1 is known from the patent BE1006605.

### OBJECTIVE

The objective is to disclose a new type mounting device. Further, the objective is to disclose a new type mounting arrangement for the radiant panels. Further, the objective is to disclose a new type method for installing the radiant panels.

### SUMMARY

The method is characterized by what are presented in the claims.

### BRIEF DESCRIPTION OF THE DRAWINGS

The accompanying drawings, which are included to provide a further understanding of the invention and constitutes a part of this specification, illustrate some embodiments of the invention and together with the description help to explain the principles of the invention. In the drawings:
Fig. 1 shows one embodiment of the mounting device according to the invention,
Fig. 2 shows a detail of one embodiment of the mounting device according to the invention,
Fig. 3 shows one embodiment of the mounting arrangement according to the invention,
Fig. 4 shows shows another embodiment of the mounting arrangement according to the invention, and
Fig. 5 shows shows another embodiment of the mounting arrangement according to the invention.

### DETAILED DESCRIPTION

In a method for installing a radiant panel, the radiant panel (6) is installed by means of mounting devices. The radiant panel is installed onto at least two mounting devices. The mounting device comprises a frame (1), a spring part (7) at the first end of the frame and a holder part (8) at the second end of the frame. The spring part (7) comprises a spring (4), a spring nest (3) and a spring nest holder (2). A radiant panel (6) is installed onto the frame and attached by means of the spring part (7) and the holder part (8) to the mounting device. By means of the mounting devices the radiant panels (6) can be installed and attached to structures, such as to a ceiling, without the need for the customization or drilling or the like of the installed radiant panel. The radiant panel is installed so that the first side of the radiant panel (6) is pushed towards the spring (4) of the spring parts (7) of the mounting devices such that the second side of the radiant panel (6) can be lifted on the holder parts (8) of the frames (1) and on top of the frames (1) of the mounting devices, and the push of the first side of the radiant panel towards the spring parts (7) is released such that the radiant panel places onto the frames of the mounting devices and the radiant panel is supported by the spring parts (7) and holder parts (8) of the mounting devices.

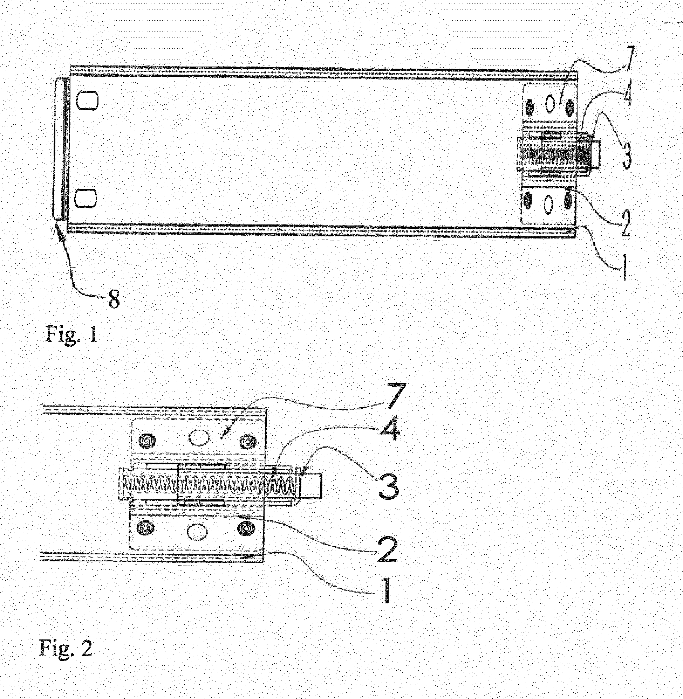

Some embodiments of the mounting arrangement are shown in Figs. 1 - 5.

In this context, the radiant panel (6) means any radiant panel, e.g. a heating radiant panel, a cooling radiant panel, a heating and cooling radiant panel, a radiant ceiling panel or their combination.

In this context, the frame (1) means any frame, support structure or the like. The frame can be formed from metal. Alternatively, the frame can be formed from polymer material, plastic, composite material or other suitable material. In one embodiment, the frame is formed from metal, plastic, composite material or their combination.

In this context, the spring part (7) means any part which comprises any spring mechanism. The spring part or its desired parts can be formed from metal. Alternatively, the spring part or its desired parts can be formed from polymer material, plastic, composite material or other suitable material. In one embodiment, the spring part is formed from metal, plastic, composite material or their combination.

In one embodiment, the spring part (7) comprises at least a spring mechanism. In one embodiment, the spring part (7) comprises at least a spring (4) and a spring nest (3). In one embodiment, the spring part (7) comprises a spring (4) and a spring nest (3) and a spring nest holder (2). In this context, the nest may be any nest, housing or the like element into which the spring has been placed. The spring nest holder (2) can be fixed to the frame (1) by means of any fixing element, such as glue, screw, lamination, welding or other suitable element. Preferably, the spring of the spring part has suitable compression load. In one embodiment, compression of the spring is between 10 - 30 mm.

In this context, the holder part (8) means any holder, clamp, clip, support, connector or the like for carrying, supporting or holding the radiant panel on the frame (1). The holder part can be formed from metal. Alternatively, the holder part can be formed from polymer material, plastic, composite material or other suitable material.

In a method for installing a radiant panel, the radiant panel (6) is installed in connection with mounting devices, preferably onto at least two mounting devices which comprise a frame (1), a spring part (7) at the first end of the frame and a holder part (8) at the second end of the frame, and the first side of the radiant panel (6) is pushed towards the spring parts (7) of the mounting devices such that the second side of the radiant panel (6) can be lifted on top of the frame (1) of the mounting devices, preferably on the holder part of the frame, and the push of the first side of the radiant panel towards the spring parts (7) is released such that the radiant panel places onto the frames of the mounting devices and the radiant panel is supported by the spring parts (7) and holder parts (8) of the mounting devices.

In one embodiment, the radiant panel (6) is installed so that an inner bent stiffener (5) of the radiant panel is placed on the spring nest (3), preferably after which the radiant panel (6) is pushed towards the spring (4) so that the second side of the panel (6) can be lifted on top of the frame (1).

The removal of the panel (6) can be made in the same way, preferably in the reverse order, as the installing.

By means of the mounting device the radiant panels can be directly attached to the ceilings. The installation can be made easily. Further, the mounting device makes it possible to install the radiant panels to the ceiling surface without the need to make holes or the like into the panel for the installation. Further, thanks to the mounting device the radiant panels can be easily removed safely without surface damage of the panels. Further, thanks to the mounting device the installation of the panels takes less space than the previously used installation methods.

### EXAMPLES

Figs. 1 and 2 show a mounting device for a surface installation of the radiant ceiling panel to a ceiling structure and a detail of the mounting device. The mounting device comprises a frame (1), a spring part (7) at the first end of the frame and a holder part (8) at the second end of the frame. The spring part (7) comprises a spring (4), a spring nest (3) and a spring nest holder (2).

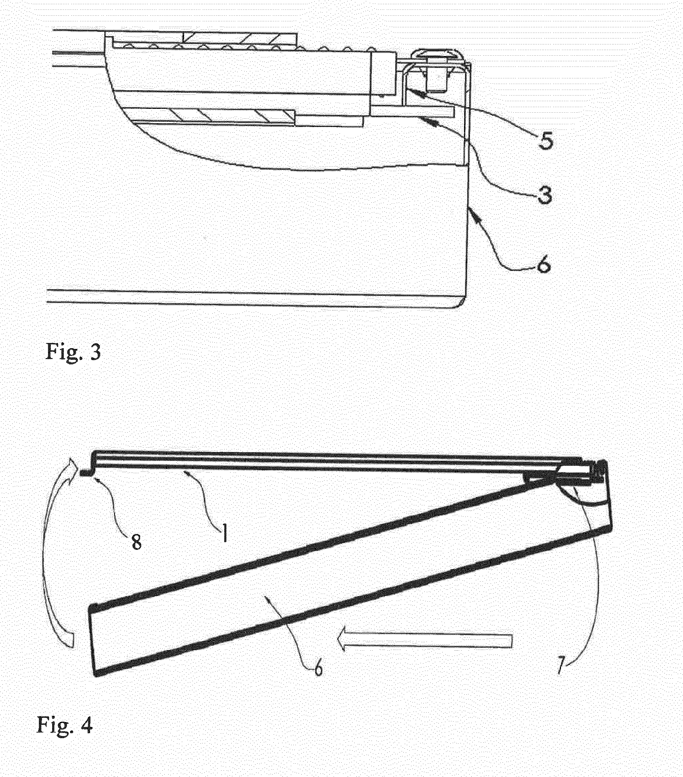

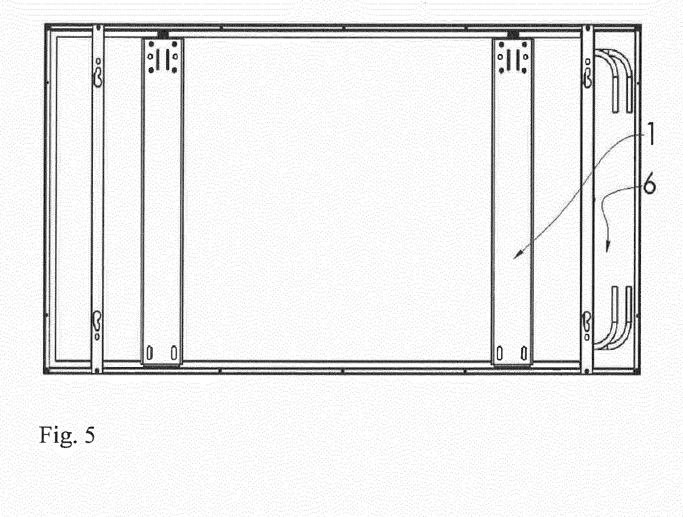

Fig. 3 shows a broken-out section of the radiant ceiling panel (6) which is supported on top of the spring part, especially on the spring nest (3). Fig. 4 shows an installation principle in which the panel (6) is pushed towards the spring part (7) and especially spring of the spring part (7) and the second side of the panel is lifted on top of the frame (1), preferably on the holder part (8) of the frame (1). Fig. 5 shows the mounting arrangement from topside of the radiant panel (6) after the installation. The radiant panel (6) is installed onto at least two mounting devices which comprise a frame (1), a spring part at the first end of the frame and a holder part at the second end of the frame. The first side of the radiant panel (6) is pushed towards the spring of spring parts (7) of the mounting devices such that the second side of the radiant panel (6) can be lifted on top of the frame (1) of the mounting devices, preferably on the holder part (8). The push of the first side of the radiant panel towards the spring parts (7) is released such that the radiant panel places onto the frames of the mounting devices and the radiant panel is supported by the spring parts (7) and holder parts (8) of the mounting devices. The panel (6) can be installed so that its inner bent stiffener (5) is placed on top of the spring nest (3) of the spring part (7), after which the panel (6) is pushed towards the spring of the spring part (7) so that the second side of the panel (6) can be lifted on the holder part (8) at the second end of the frame (1), and after which the panel (6) is released so that the panel (6) is positioning itself on top of the mounting device and the panel is now installed to the ceiling. Preferably, the mounting devices are arranged 300 - 500 mm from the end of the panel. Preferably, the span length of the mounting devices is less than 2 metres. The removal of the panel (6) can be made in the same way, preferably in the reverse order, as the installing.

The mounting device can be fixed into the ceiling by using screws or bolts in the designated holes made into the frame (1). For the correct positioning of the mounting device a laser or other marking device can be used.

The elements and parts of the radiant panel used in these examples are known per se in the art, and therefore they are not described in any more detail in this context.

The mounting device is suitable in different embodiments for using to install different kinds of radiant panels to different structures, such as to ceilings. The method is suitable in different embodiments for using to install different kinds of radiant panels.

The invention is not limited merely to the examples referred to above; instead many variations are possible within the scope of the inventive idea defined by the claims.

## Claims

1. A method for installing a radiant panel, whereby the radiant panel (6) is installed onto at least two mounting devices which comprise a frame (1), a spring part (7) at the first end of the frame and a holder part (8) at the second end of the frame, and the spring part (7) comprises a spring (4), a spring nest (3) and a spring nest holder (2), **characterized in that** the first side of the radiant panel (6) is pushed towards the spring (4) of the spring parts (7) of the mounting devices such that the second side of the radiant panel (6) is lifted on the holder parts (8) of the frames (1) and on top of the frames (1) of the mounting devices, and the push of the first side of the radiant panel towards the spring parts (7) is released such that the radiant panel places onto the frames of the mounting devices and the radiant panel is supported by the spring parts (7) and holder parts (8) of the mounting devices.

2. The method according to claim 1, **charac**t**erized** in that the radiant panel (6) is installed so that an inner bent stiffener (5) of the radiant panel (6) is placed on the spring nest (3) of the spring part, after which the radiant panel (6) is pushed towards the spring (4) of the spring part (7) so that the second side of the panel (6) can be lifted on top of the frame (1).

3. The method according to claim 1 or 2, **characterized in that** the mounting devices are arranged 300 - 500 mm from the end of the radiant panel (6).

4. The method according to any one of claims 1 - 3, **characterized in that** the span length of the mounting devices is less than 2 metres.

## Patentansprüche

1. Verfahren zum Installieren einer Strahlungsplatte, wobei die Strahlungsplatte (6) auf zumindest zwei Anbringungseinrichtungen installiert wird, die einen Rahmen (1), einen Federteil (7) an dem ersten Ende des Rahmens und einen Halterteil (8) an dem zweiten Ende des Rahmens umfassen, und der Federteil (7) eine Feder (4), eine Federaufnahme (3) und einen Federaufnahmenhalter (2) umfasst,
**dadurch gekennzeichnet, dass** die erste Seite der Strahlungsplatte (6) in Richtung der Feder (4) der Federteile (7) der Anbringungsvorrichtungen geschoben wird, so dass die zweite Seite der Strahlungsplatte (6) auf die Halterteile (8) der Rahmen (1) und auf die Oberseite der Rahmen (1) der Anbringungseinrichtungen gehoben wird, und der Schub von der ersten Seite der Strahlungsplatte in Richtung der Federteile (7) freigegeben wird, so dass sich die Strahlungsplatte auf die Rahmen der Anbringungseinrichtungen aufsetzt und die Strahlungsplatte durch die Federteile (7) und die Halterteile (8) der Anbringungseinrichtungen abgestützt ist.

2. Verfahren nach Anspruch 1, **dadurch gekennzeichnet, dass** die Strahlungsplatte (6) installiert ist, so dass eine innere gebogene Versteifung (5) der Strahlungsplatte (6) auf der Federaufnahme (3) des Federteils aufsitzt, wonach die Strahlungsplatte (6) in Richtung der Feder (4) des Federteils (7) geschoben wird, so dass die zweite Seite der Platte (6) auf die Oberseite des Rahmens (1) gehoben werden kann.

3. Verfahren nach Anspruch 1 oder 2, **dadurch gekennzeichnet, dass** die Anbringungseinrichtungen 300-500 mm von dem Ende der Strahlungsplatte (6) entfernt angeordnet sind.

4. Verfahren nach einem der Ansprüche 1 bis 3, **dadurch gekennzeichnet, dass** die Spannlänge der Anbringungseinrichtungen weniger als 2 Meter beträgt.

## Revendications

1. Procédé pour installer un panneau rayonnant, dans lequel le panneau rayonnant (6) est installé sur au moins deux dispositifs de montage qui comprennent un châssis (1), une pièce à ressort (7) à la première extrémité du châssis et une pièce de fixation (8) à la deuxième extrémité du châssis, et la pièce à ressort (7) comprend un ressort (4), une cavité de ressort (3) et une fixation de cavité de ressort (2), **caractérisé en ce que** le premier côté du panneau rayonnant (6) est poussé vers le ressort (4) des pièces à ressort (7) des dispositifs de montage de telle sorte que le deuxième côté du panneau rayonnant (6) soit soulevé sur les pièces de fixation (8) des châssis (1) et sur les châssis (1) des dispositifs de montage, et la poussée du premier côté du panneau rayonnant vers les pièces à ressort (7) est relâchée de telle sorte que le panneau rayonnant se place sur les châssis des dispositifs de montage et que le panneau rayonnant soit supporté par les pièces à ressort (7) et les pièces de support (8) des dispositifs de montage.

2. Procédé selon la revendication 1, **caractérisé en ce que** le panneau rayonnant (6) est installé de telle sorte qu'un raidisseur coudé intérieur (5) du panneau rayonnant (6) soit placé sur la cavité de ressort (3) de la pièce à ressort, après quoi le panneau rayonnant (6) est poussé vers le ressort (4) de la pièce à ressort (7) de sorte que le deuxième côté du panneau (6) puisse être soulevé sur le châssis (1).

3. Procédé selon la revendication 1 ou 2, **caractérisé en ce que** les dispositifs de montage sont disposés à 300-500 mm de l'extrémité du panneau rayonnant (6).

4. Procédé selon l'une quelconque des revendications 1-3, **caractérisé en ce que** la portée des dispositifs de montage est de moins de 2 mètres.
